# EUROPÄISCHE PATENTSCHRIFT

(11) **EP 3 323 219 B1**
(45) Veröffentlichungstag und Bekanntmachung des Hinweises auf die Patenterteilung: **02.10.2019**
(21) Anmeldenummer: 16741854.0
(22) Anmeldetag: 23.06.2016
(51) Int. Cl.: H04L 7/00, H04L 25/03

(54) **VERFAHREN, VORRICHTUNG UND SYSTEM ZUM EMPFÄNGERSEITIGEN BESTIMMEN EINES ABTASTZEITPUNKTS**
METHOD, DEVICE AND SYSTEM FOR DETERMINING THE SAMPLING TIME AT THE RECEIVER
PROCÉDÉ, DISPOSITIF ET SYSTÈME À DETERMINER LE TEMPS D'ÉCHANTILLONAGE À COTE DU RECEPTEUR

(30) Priorität: 15.07.2015 DE 102015111465
(43) Veröffentlichungstag der Anmeldung: 23.05.2018
(73) Patentinhaber: INOVA Semiconductors GmbH, 81671 München (DE)
(72) Erfinder: NEUMANN, Roland, 81671 München (DE)
(74) Vertreter: Reich, Jochen
(86) Internationale Anmeldenummer: PCT/EP2016/001074
(87) Internationale Veröffentlichungsnummer: WO 2017/008885

(56) Entgegenhaltungen:
- EP-A2- 2 696 547
- EP-A2- 2 779 551
- DE-A1- 10 131 207
- US-A1- 2010 327 924

## Beschreibung

Die vorliegende Erfindung betrifft ein Verfahren zum Bestimmen eines Abtastzeitpunkts und einer entsprechenden Vorrichtung. Ein Bestimmen eines Abtastzeitpunkts dient einem Veranlassen einer Messung einer Signalstärke eines Datensignals zu einem diskreten Zeitpunkt zu dem eine niedrige Wahrscheinlichkeit einer Fehlinterpretation der Messung gegeben ist. Eine Interpretation der Signalstärke beinhaltet ein Abbilden eines Messergebnisses auf eine Bitbelegung. Folglich kann das erfindungsgemäße Verfahren auch als ein Verfahren zum Setzen eines Messpunkts oder eines Abtastzeitpunkts oder eben zur Messung einer Stromstärke oder Spannungshubs vorteilhaft verwendet werden. Das Bestimmen des Abtastzeitpunkts kann einem Auslösen mindestens eines Abtastens eines Trägermediums dienen.

DE 10 334 064 B3 zeigt ein Verfahren zum Kalibrieren eines den Abtastzeitpunkt eines Empfangssignals in einem Mobilfunkempfänger beeinflussenden diskreten Abtastungssteuersignales eines Abtastphasenauswahlelements durch Festlegen von Quantisierungsintervallen eines Abtastzeitfehlersignals, wobei jedem Quantisierungsintervall ein vorgegebener Wert des diskreten Abtastungssteuersignals zugeordnet ist.

DE 199 04 956 C2 lehrt ein Verfahren zur automatischen Abtastzeitpunkt-Einstellung eines digitalen Korrelationsempfängers zur Datenübertragung, der durch geeignete Auswertung des FBAS-Signals vorsynchronisiert ist und bei dem das Nutzsignal im Empfänger entsprechende Abtastzeitpunkte entlang der Signalform aufweist.

DE 19 717 642 A1 zeigt ein Verfahren zur Datenregeneration, bei dem aus einem Empfangssignal ein Regelkriterium für einen Phasenregelkreis gewonnen wird, der ein Abtasttaktsignal erzeugt, und schlägt vor, dass übertragene Daten durch einen fehlerkorrigierenden Code gesichert werden, dass empfangsseitig fortlaufend die Übertragungsfehlerrate ermittelt wird und dass versuchsweise eine gesteuerte Phasenverschiebung des Abtasttaktsignals gegenüber dem Empfangssignal und hiermit der Abtastzeitpunkt geändert wird und dass aufgrund der gemessenen Übertragungsfehlerraten der optimale Abtastzeitpunkt ermittelt werden kann.

EP 2 779 551 A2 (Intel Corp.) offenbart ein Verfahren zur Steuerung von Datenübertragungseinstellungen.

DE 101 31 207 (Siemens) offenbart eine Synchronisationszeit, bei der die Amplitude des Filtersignals maximal ist.

Bekannt sind Verfahren, welche derart einen auf einem Trägermedium gemessenen verfälschten Wert anpassen, dass ein wahrscheinlich korrekter Wert ausgebbar ist. Hierzu zählen fehlerkorrigierende Verfahren, welche einen zu erwartenden Fehler derart ausgleichen, dass ein korrigierender Wert invers zu dem Fehler auf das empfangene Datensignal aufmoduliert wird um zu dem korrekten Wert zu gelangen. Ferner ist es gemäß dem Stand der Technik möglich in Abhängigkeit eines durch das Trägermedium zu erwartenden Fehlers einen Fehler derart bereits vorab invers auf das zu sendende Signal aufzumodulieren, dass der Fehler bei der Übertragung des vormodulierten Signals den Fehler ohne weiteres Zutun korrigiert.

Herkömmliche Verfahren haben den Nachteil, dass in aufwendigen und fehlerbehafteten Verfahrensschritten, entweder vor oder nach einer Übertragung ein Signal derart fehlerkorrigiert werden muss, dass ein Sollsignalwert erreicht wird. Ferner stellen bekannte Verfahren zwar auf ein Vorverzerren eines Signals ab, um ein möglichst geeignetes Signal mit steilen Flanken und einer großen Amplitude zu erzeugen, verfehlen jedoch den geeigneten Zeitpunkt dieses optimierte Signal auch geeignet auszumessen. Hierbei werden Übertragungsparameter und/ oder Filterkoeffizienten nicht derart berücksichtigt, dass eine verlässliche Aussage über einen geeigneten Zeitpunkt eines Abtastens des kontinuierlichen Datensignals zu treffen ist.

Demgemäß ist es eine Aufgabe der vorliegenden Erfindung ein Verfahren zum Bestimmen und optional zum Setzen eines Abtastzeitpunkts bereitzustellen, welches die Fehlerrate minimiert. Somit soll ohne auf das Signal direkt einzuwirken ein optimaler Messpunkt gesetzt werden, an dem sich die Signalstärke derart verhält, dass diese möglichst genau den zu kodierenden Wert wiederspiegelt beziehungsweise derart weit von einem Schwellwert entfernt ist, dass eine verlässliche Aussage bezüglich eines Unter- oder Überschreitens des Schwellwerts getroffen werden kann. Das vorgeschlagene Verfahren beziehungsweise die vorgeschlagene Vorrichtung soll ohne großen technischen Aufwand betrieben werden können und sich gegebenenfalls mit anderen Hardwarekomponenten derart kombinieren lassen, dass diese wiederverwendet werden können. Es ist weiterhin eine Aufgabe der vorliegenden Erfindung eine entsprechend eingerichtete Vorrichtung und ein System aufweisend die Vorrichtung bereitzustellen.

Die Aufgabe wird gelöst durch den Gegenstand des Patentanspruchs 1.

Demgemäß ist ein Verfahren zum empfängerseitigen Bestimmen eines Abtastzeitpunkts eines kontinuierlichen Datensignals und zum Erkennen eines Bitwertes innerhalb einer Bitbreite eines seriellen Bitdatenstroms vorgesehen. Gemäß des erfindungsgemäßen Verfahrens erfolgt ein Messen mindestens eines Filterkoeffizienten des kontinuierlichen Datenstroms, welcher zur Modulierung des zu übertragenden kontinuierlichen Datensignals durch eine Datensignalkompensationseinrichtung vorgesehen ist und ein Bestimmen des Abtastzeitpunkts in Abhängigkeit des mindestens einen gemessenen Filterkoeffizienten und einer bereitgestellten Abtastzeitpunktmetrik derart, dass eine Amplitude des zu übertragenden kontinuierlichen Datensignals zu diesem Abtastzeitpunkt ein Maximum erreicht.

Ein empfängerseitiges Bestimmen des Abtastwerts eines Datenstroms impliziert einen Sender, der das kontinuierliche Datensignal auf ein Trägermedium moduliert. Hierbei muss jedoch der Sender nicht besonders eingerichtet sein, so dass das erfindungsgemäße Verfahren mit herkömmlichen Sendern betrieben werden kann. Hierbei ist der Sender mit dem Empfänger über mindestens ein Trägermedium derart kommunikativ verbunden, dass diese Kommunikationssignale austauschen. Der Sender ist typischerweise eingerichtet einen Bitstrom, also ein beliebig lange Folge von einzelnen Bits, mittels des kontinuierlichen Datenstroms zu übersenden. Hierbei kodiert eine Signalstärke zu einem gewissen Zeitpunkt über einem Schwellwert ein gesetztes Bit und eine Signalstärke unter dem Schwellwert ein nicht gesetztes Bit. Da ein Verlauf einer Signalstärke technisch bedingt näherungsweise und nicht binär zu kodieren ist, entsteht eine Kurve, welche einen kontinuierlichen Verlauf der Signalstärke auf dem Medium näherungsweise abbildet. Somit kann also an einzelnen unvorteilhaften Zeitpunkten keine Aussage getroffen werden, ob nun ein Bit gesetzt ist oder eben auch nicht. Dies ist der Fall, falls eine Signalstärke einen Wert aufweist, der dem Schwellwert nahe ist. Dem wird erfindungsgemäß begegnet, in dem besonders geschickt ermittelt wird, zu welchem Zeitpunkt die Amplitude des Signalverlaufs ein Maximum aufweist.

Besonders vorteilhaft ist es, dass erfindungsgemäß ohne Anpassung des Senders empfängerseitig nicht nur ein Abtasten an solchen unvorteilhaften Zeitpunkten, also wenn eine Signalstärke nahe dem Schwellwert ist, vermieden wird, sondern ein Abtasten bei eben maximaler Amplitude erfolgt. Dies garantiert einen ausreichenden Abstand der Signalstärke vom Schwellwert zu einem Messzeitpunkt, also dem Abtastzeitpunkt. Der Abtastzeitpunkt ist zeitlich innerhalb einer Bitbreite angeordnet, welche bestimmt innerhalb welcher Zeitspanne des jeweilige zu übertragende Bit kodiert ist. Somit ist also der Abtastzeitpunkt jeweils innerhalb dieser Bitbreite zu wählen und liest jeweils eine Bitbelegung aus. Die einzelnen Bitbreiten, welche den seriellen Bitdatenstrom in einzelne Bits unterteilen sind typischerweise zeitlich äquidistant.

Bei typischerweise durchgeführten Abtastungen kann es sich um Abtastzeitpunkte zur zeitlichen Mitte einer Bitbreite handeln. So steigt die Signalstärke beispielsweise bei einem Wechsel von einer kodierten Null zu einer kodierten Eins gegen Anfang der Bitbreite, erreicht in etwa in der Mitte der Bitbreite ihr Maximum und fällt danach ab, falls anschließend eine Null kodiert werden soll. Somit kann als ein Referenzpunkt eines geeigneten Abtastzeitpunkts die Mitte einer Bitbreite gewählt werden. Um den Abtastzeitpunkt weiter zu verbessern erfolgt erfindungsgemäß ein zeitliches Verschieben des Abtastzeitpunkts in Abhängigkeit mindestens eines gemessenen Filterkoeffizienten derart, dass der Abtastzeitpunkt zeitlich an das Maximum der Amplitude verschoben wird.

Der erfindungsgemäß bestimmte Abtastzeitpunkt ist bezüglich einer Mehrzahl an übertragenen Bits beziehungsweise zu übertragenden Bits vorteilhaft und reduziert dadurch statistisch die mittlere Bitfehlerrate.

Typischerweise erfolgt das Abtasten zu einer festgesetztem Verzögerung, die erfindungsgemäß derart optimiert wird, dass das Abtasten zu einem geeigneten Zeitpunkt erfolgt, derart, dass die Fehlerquote der Übertragung, also des Erkennens eines Bitwertes je Bitbreite, möglichst gering ist. Somit ist es erfindungsgemäß vorteilhaft, dass nicht nur eine zuverlässige Datenübertragung gewährleistet werden kann, sondern auch eine Übertragungskapazität erhöht wird, da fehlerhaft übersendete, beziehungsweise fehlerhaft erkannte Bits nicht erneut gesendet werden müssen. Beispielsweise ist es möglich mehrere Bits, welche ein Wort formen auf deren Korrektheit zu prüfen und falls ein Fehler erkannt wird, das Wort erneut zu senden. Ein solches erneutes Senden kann erfindungsgemäß vermieden werden, da die Fehlerrate verglichen mit bekannten Methoden minimiert ist.

Eine solche Erhöhung der Übertragungskapazität ist gemäß bekannter Methoden mittels eines technisch aufwändigem Erhöhen der Taktfrequenz beziehungsweise einem Oversampling möglich. Dies wird jedoch erfindungsgemäß vermieden, da hier auch die Fehlerrate steigen würde. Durch ein Erhöhen der Taktrate erfolgt implizit ein Herabsetzen der Bitbreite, so dass eine Zeitspanne an der jeweils ein Maximum der Amplitude vorliegt nur kurzzeitig erreicht wird. Somit ist das Ermitteln des geeigneten Abtastzeitpunkts aufwändig und fehleranfällig. Gemäß einem Aspekt der vorliegenden Erfindung ist es möglich ohne die Taktrate zu erhöhen den Datendurchsatz zu steigern und hierzu den geeigneten Abtastzeitpunkt derart zu ermitteln, dass eine Notwendigkeit eines erneuten Sendens fehlerhaft erkannter Bits mittels des kontinuierlichen Datensignals minimiert wird.

Gemäß der vorliegenden Erfindung wird mindestens ein Filterkoeffizient vor und mindestens ein Filterkoeffizient nach einem durchgeführten beziehungsweise durchzuführenden Abtasten gemessen. Dies hat den Vorteil, dass erfindungsgemäß mit großer Genauigkeit derjenige Zeitpunkt ermittelt werden kann, an dem die Amplitude des Datensignals maximal ist. Hierzu kann es vorteilhaft sein, die Filterkoeffizienten an einem Empfänger zu messen oder aus einem Datenspeicher auszulesen. Auch können weitere Einheiten ausgelesen werden, welche beispielsweise entsprechende Koeffizienten bereitstellen. So ist es erfindungsgemäß möglich, eine weitere Datenübertragungskomponente auszulesen, welche Filterkoeffizienten berechnet und bereitstellt. Dies kann anhand eines Algorithmus zur Bereitstellung von Filterkoeffizienten, insbesondere eines sogenannten LMS-Algorithmus erfolgen. Bei dem LMS-Algorithmus kann es sich um einen Least-Mean-Squares-Algorithmus zur Approximation der Lösung eines Least-Mean-Squares-Problems oder einer Variation des Algorithmus handeln. Durch die Berücksichtigung jeweils mindestens eines Filterkoeffizienten vor und nach einem Messpunkt wird in vorteilhafter Weise die Genauigkeit mittels des vorgeschlagenen Verfahrens derart erhöht, dass sich durch die maximale Amplitudenhöhe eine geringere Fehlerwahrscheinlichkeit bei der Interpretation des Datensignals bezüglich einem Erkennen eines Bitwertes ergibt.

Ein Berücksichtigen von Filterkoeffizienten nach einem durchgeführten Abtasten stellt lediglich gemäß einem Aspekt der vorliegenden Erfindung auf mindestens einen Filterkoeffizienten nach einem angedachten, bereits durchgeführten oder einem durchzuführendem Abtasten des kontinuierlichen Datensignals ab. Somit kann zwar ein durchgeführtes Abtasten in vorherigen Iterationen bereits durchgeführt worden sein, besonders vorteilhaft ist es jedoch den Abtastzeitpunkt vor einem tatsächlichen Abtasten zu schätzen und bezüglich dieses Abtastzeitpunktes entsprechende Filterkoeffizienten zu berücksichtigen. Der Fachmann erkennt hierbei weitere Möglichkeiten eines Bestimmens eines Filterkoeffizienten nach einem durchgeführten Abtasten.

Gemäß einem weiteren Aspekt der vorliegenden Erfindung kann es vorteilhaft sein, genau einen Filterkoeffizienten vor einem vorgesehenen Abtastzeitpunkt und genau einen Filterkoeffizienten nach einem vorgesehenen Abtastzeitpunkt zu wählen. Da Filterkoeffizienten auf ein kontinuierliches Datensignal moduliert werden um ein angepasstes, vorteilhaftes Datensignal zu erzeugen kann es besonders vorteilhaft sein, jeweils genau einen Filterkoeffizienten vor und nach einem Abtastzeitpunkt zu berücksichtigen. Diese können derart gewählt werden, dass aus einer Mehrzahl von Filterkoeffizienten genau diejenigen ausgewählt werden, welche zeitlich unmittelbar vor beziehungsweise unmittelbar nach einem Abtastzeitpunkt angewendet werden. Während typischerweise stets gleiche Filterkoeffizienten Verwendung finden, so ist es erfindungsgemäß vorgesehen eine Mehrzahl von möglicherweise jeweils unterschiedlichen Filterkoeffizienten anzuwenden, welche auf das kontinuierliche Datensignal angewendet werden. Somit können erfindungsgemäß die Flanken eines kontinuierlichen Datenstroms genauer moduliert werden. Ferner können diese unterschiedlichen Filterkoeffizienten bei der Bestimmung des Abtastzeitpunkts berücksichtigt werden.

Gemäß einem weiteren Aspekt der vorliegenden Erfindung wird der mindestens eine Filterkoeffizient entweder nur vor oder nur nach einem durchgeführten Abtasten gemessen. Dies hat den Vorteil, dass erfindungsgemäß ein besonders effizientes Verfahren zum Bestimmen eines Abtastzeitpunkts vorgeschlagen wird. Generell können die Parameter der Filterkoeffizienten mittels einer Abtastmetrik bestimmt werden, welche beschreibt, welche Eigenschaften die Filterkoeffizienten aufweisen, damit diese Berücksichtigung finden. Hier kann eingestellt werden, dass beispielsweise nur Filterkoeffizienten vor einem Abtastzeitpunkt berücksichtigt werden. Eine solche Metrik kann entweder als eine Menge von Steuerbefehlen bereitgestellt werden oder fest verschaltet in einer entsprechend eingerichteten Hardwarekomponente implementiert sein.

Gemäß einem weiteren Aspekt der vorliegenden Erfindung wird ein Messen des mindestens einen Filterkoeffizienten mittels mindestens eines Messverfahrens aus einer Menge von Messverfahren durchgeführt, die Menge aufweisend ein Auslesen mindestens eines Messsensors, ein Berechnen in Abhängigkeit von Übertragungsparametern, ein Bestimmen, ein Auslesen eines Datenspeichers, ein Auslesen einer Übertragungskonfiguration, ein Auswerten eines Algorithmus insbesondere eines LMS-Algorithmus, ein Bestimmen mindestens eines Pre-cursors und ein Bestimmen mindestens eines Post-cursors. Dies hat den Vorteil, dass eine Vielzahl an geeigneten Messverfahren verwendet werden kann, welche bereits in einer entsprechenden Einrichtung implementiert ist und wieder verwendet werden können. Auch ist es erfindungsgemäß möglich die einzelnen Verfahren in vorteilhafter Weise derart zu kombinieren, dass gleichzeitig mehrere Verfahren Anwendung finden können. So kann beispielsweise ein erster Filterkoeffizient an dem Empfänger gemessen werden und ein zweiter Filterkoeffizient kann mittels eines entsprechend eingerichteten Algorithmus berechnet werden. Vorteilhaft ist auch eine Kombination der Messverfahren.

Gemäß der vorliegenden Erfindung sieht die Abtastzeitpunktmetrik vor, dass der Abtastzeitpunkt in Abhängigkeit einer Summe von Signalstärken der gemessenen Filterkoeffizienten bestimmt wird. Dies hat den Vorteil, dass die Signalstärken der Filterkoeffizienten in einfacher Weise lediglich mittels Addition berücksichtigt werden können. Dies lässt sich mit lediglich geringem technischen Aufwand implementieren und erlaubt dennoch eine genaue Ermittlung des Abtastzeitpunkts.

Gemäß einem weiteren Aspekt der vorliegenden Erfindung sieht die Abtastzeitpunktmetrik vor, dass der Abtastzeitpunkt zum Minimum der Summe der Signalstärken der gemessenen Filterkoeffizienten vorliegt. Dies hat den Vorteil, dass erfindungsgemäß ein optimaler Messzeitpunkt gefunden wird. Ein optimaler Messzeitpunkt kann definiert werden, als ein Abtastzeitpunkt an dem die Amplitude des übertragenen Datensignals am höchsten ist. Die Bezeichnung als optimal erfolgt, da die maximale Amplitude gewährleistet, dass der Bitwert, der durch einen Zeitabschnitt und die Signalstärke des kontinuierlichen Datensignals definiert wird, möglichst eindeutig ausgelesen werden kann. Da ein voreingestellter Schwellwert bestimmt ob zu einem Abtastzeitpunkt eine Signalstärke als eine Null beziehungsweise als eine Eins interpretiert wird, ist es besonders vorteilhaft, sich bezüglich dem Schwellwert besonders deutlich abzugrenzen, derart, dass eine möglichst eindeutige Aussage bezüglich des Vorhandenseins einer Signalstärke über beziehungsweise unter dem Schwellwert getroffen werden kann. Dies ist besonders bei einer maximalen Amplitude möglich, was erfindungsgemäß ausgenutzt wird. Hierzu hat sich die vorgeschlagene Metrik in Testreihen als besonders zuverlässig erwiesen.

Gemäß einem weiteren Aspekt der vorliegenden Erfindung wird die Abtastzeitpunktmetrik mittels mindestens eines Bereitstellungsverfahrens aus einer Menge bereitgestellt, die Menge aufweisend ein Auslesen eines Datenspeichers, ein Bereitstellen einer festverdrahteten Metrikeinheit, ein Bereitstellen einer hardware-technisch eingerichteten Metrikeinheit, ein Bereitstellen einer Metrikschaltung, ein Bereitstellen einer entsprechend geschalteten Metrikkomponente, ein Bereitstellen eines Steuerwerks und Bereitstellen eines Schaltwerks. Dies hat den Vorteil, dass die erfindungsgemäße Metrik auf eine Vielzahl von Möglichkeiten bereitgestellt werden kann, welche sich untereinander besonders synergetisch kombinieren lassen. So kann die Metrik verteilt über mehrere Rechenbausteine verteilt implementiert werden, wobei jeder Baustein mindestens einen Teil der vorgeschlagenen Metrik bereitstellt.

Gemäß einem weiteren Aspekt der vorliegenden Erfindung wird der zu bestimmende Abtastzeitpunkt relativ zu einem weiteren Zeitpunkt aus einer Menge von Zeitpunkten bestimmt, die Menge aufweisend: einen weiteren Abtastzeitpunkt, eine Bitbreitengrenze, eine Datensignalflanke und eine gemessene Amplitudenhöhe. Dies hat den Vorteil, dass der Abtastzeitpunkt ausgehend von bekannten Zeitpunkten relativ aber auch absolut bestimmt werden kann.

Gemäß einem weiteren Aspekt der vorliegenden Erfindung wird zum Messen mindestens eines Filterkoeffizienten eine Datensignalstärke ermittelt. Dies hat den Vorteil, dass die Filterkoeffizienten empirisch erfasst werden können und dass Fehler eines Auslesens von Filterkoeffizienten vermieden werden können. Somit lässt sich in einfacher Weise der jeweilige Filterkoeffizient ermitteln.

Gemäß einem weiteren Aspekt der vorliegenden Erfindung wird die Datensignalkompensationseinrichtung als mindestens eine Einheit aus einer Menge von Einheiten gebildet, die Menge aufweisend: ein Steuerwerk, ein Schaltwerk, ein Verzerrer, ein Vorverzerrer, ein Empfänger und ein Sender. Dies hat den Vorteil, dass bereits vorhandene Einrichtungen erfindungsgemäß angepasst werden können und danach wieder Verwendung finden können. So ist es möglich bereits bestehende Systeme derart anzupassen, dass diese das erfindungsgemäße Verfahren implementieren.

Gemäß einem weiteren Aspekt der vorliegenden Erfindung wird das kontinuierliche Datensignal mittels mindestens einem Signalträgermedium aus einer Menge von Medien übertragen, die Menge aufweisend: ein Kabel, eine leitende Verbindung, eine differentielle Leitung, eine Koaxleitung und eine Bus-Leitung. Dies hat den Vorteil, dass das vorgeschlagene Verfahren und die vorgeschlagene Vorrichtung mit einer Vielzahl von Signalträgermedien kompatibel ist und somit bestehende Systeme mit unterschiedlichen Signalträgermedien um die erfindungsgemäßen Merkmale vorteilhaft erweitert werden können. Insbesondere sind auch mehrere Teilstrecken der Signalübertragung mit jeweils unterschiedlichen Signalträgermedien zu überbrücken.

Gemäß einem weiteren Aspekt der vorliegenden Erfindung wird eine Messeinrichtung zum Bestimmen der Amplitude des Datensignals zu einem vorbestimmten oder ermittelten Zeitpunkt ausgelesen. Dies hat den Vorteil, dass die Amplitude empirisch ohne weitere zwischengeschalteter Komponenten gemessen werden kann. Es ist auch möglich den Schritt iterativ durchzuführen und gemäß mehreren, vorbestimmten Zeitpunkten Messwerte abzugreifen.

Die Aufgabe wird gelöst durch eine Vorrichtung zur empfängerseitigen Bestimmung eines Abtastzeitpunkts eines kontinuierlichen Datensignals und zum Erkennen eines Bitwertes innerhalb einer Bitbreite eines seriellen Bitdatenstroms, aufweisend:
- eine Messeinheit eingerichtet zum Messen mindestens eines Filterkoeffizienten, welcher zur Modulierung des zu übertragenden kontinuierlichen Datensignals durch eine Datensignalkompensationseinrichtung vorgesehen ist, wobei mindestens ein Filterkoeffizient vor und mindestens ein Filterkoeffizient nach einem durchgeführten Abtasten messbar ist; und
- eine Abtastzeiteinheit zum Bestimmen des Abtastzeitpunkts in Abhängigkeit der mindestens zwei gemessenen Filterkoeffizienten und einer bereitgestellten Abtastzeitpunktmetrik derart, dass eine Amplitude des zu übertragenden kontinuierlichen Datensignals zu diesem Abtastzeitpunkt ein Maximum erreicht, wobei die Abtastzeitpunktmetrik vorsieht, dass der Abtastzeitpunkt in Abhängigkeit einer Summe von Signalstärken der gemessenen Filterkoeffizienten bestimmt wird.

Die Aufgabe wird auch gelöst durch ein Kommunikationssystem aufweisend mindestens eine der beschriebenen Vorrichtungen. Die Aufgabe wird auch gelöst durch ein Computerprogramm, welches die Durchführung eines der beschriebenen Verfahren veranlasst sowie einem Computerprogrammprodukt, welches entsprechende Befehle abspeichert.

Im Folgenden werden einzelne Aspekte der vorliegenden Erfindung beispielhaft anhand der Figuren erläutert. Dabei zeigt:
- Figur 1: eine Sendeeinheit gemäß einem Anwendungsszenario eines Bestimmens eines Abtastzeitpunkts gemäß einem Aspekt der Erfindung;
- Figur 2: eine Empfangseinheit gemäß einem Anwendungsszenario eines Bestimmens eines Abtastzeitpunkts gemäß einem Aspekt der Erfindung;
- Figur 3: ein Diagramm eines Verlaufs eines kontinuierlichen Datenstroms gemäß einem Aspekt der vorliegenden Erfindung;
- Figur 4: ein Bestimmen eines Abtastzeitpunkts eines Datenstroms gemäß einem weiteren Aspekt der vorliegenden Erfindung;
- Figur 5: ein Bestimmen eines Abtastzeitpunkts eines kontinuierlichen Datenstroms gemäß einem weiteren Aspekt der vorliegenden Erfindung;
- Figur 6: ein Verfahren zum Bestimmen eines Abtastzeitpunkts eines kontinuierlichen Datenstroms gemäß einem Aspekt der vorliegenden Erfindung; und
- Figur 7: eine Vorrichtung zum Bestimmen eines Abtastzeitpunkts eines kontinuierlichen Datenstroms gemäß einem Aspekt der vorliegenden Erfindung.

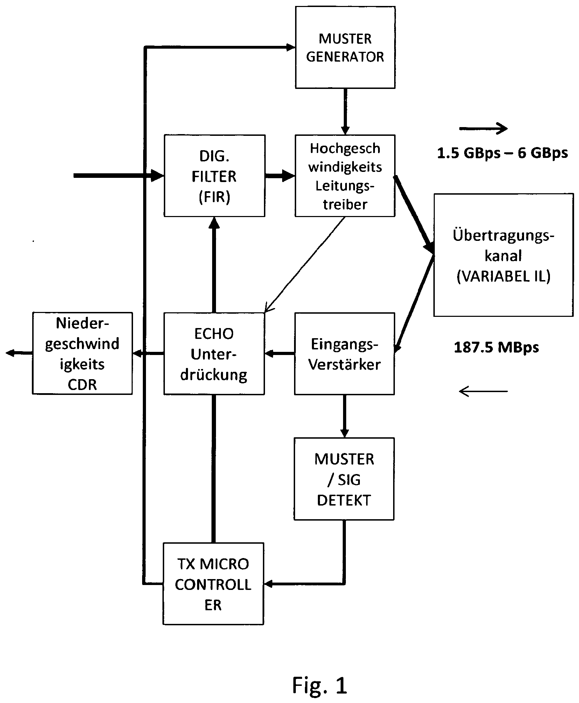

Figur 1 zeigt eine Sendeeinrichtung aufweisend eine Mehrzahl an Einrichtungen, welche zum Erzeugen eines Datenstroms eingerichtet sind. Dieser erzeugte Datenstrom wird sodann auf einen Übertragungskanal aufmoduliert. Dies erfolgt beispielsweise mittels eines Anlegens geeigneter Spannung an den Übertragungskanal. Zum Erzeugen des Datensignals können teilweise bekannte Komponenten Einsatz finden, die unter anderem eine Rauschunterdrückung begünstigen oder eine Signalverstärkung veranlassen um ein möglichst fehlerfreies Übertragen des Datensignals über den Übertragungskanal durchzuführen. Der Übertragungskanal ist erfindungsgemäß als mindestens ein Trägermedium ausgeformt, welches den Sender des Datensignals kommunikativ an den Empfänger des Datensignals koppelt. Auch können mehrere Halbleiterbausteine vorgesehen sein, welche die Steuerbefehle zur Durchführung der beschriebenen Schritte veranlassen. Die vorliegende Erfindung kann mit herkömmlichen Sendern betrieben werden, wobei die Erfindung jedoch ebenso auf ein System aufweisend einen Sender und die erfindungsgemäße Vorrichtung gerichtet ist, welche kommunikativ miteinander gekoppelt sind.

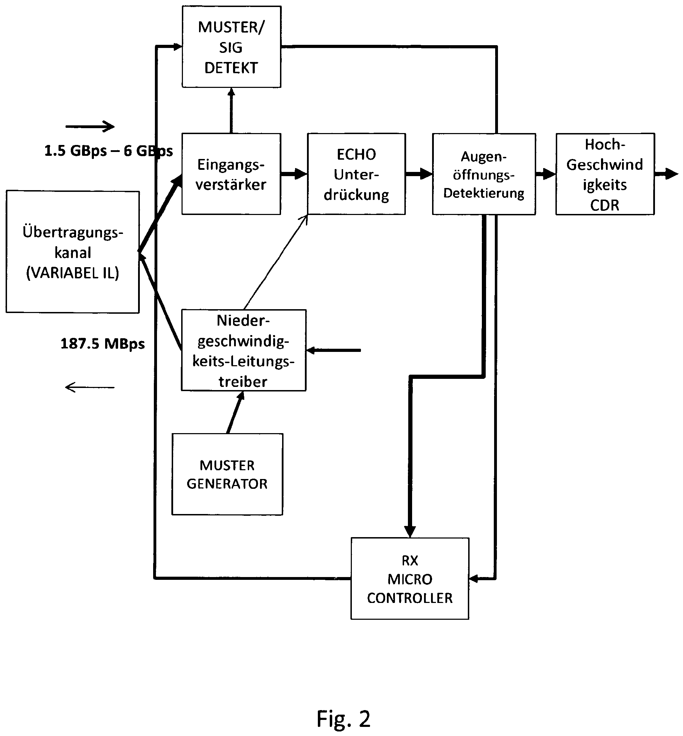

Figur 2 zeigt einen Empfänger zum Empfangen des Datenstroms, welcher in der Figur 1 rechts in den Übertragungskanal eingespeist wurde und nunmehr in der vorliegenden Figur 2 links mittels des Übertragungskanals beziehungsweise dem Trägermedium übertragen und anschließend empfangen wird. Der Empfänger weist erfindungsgemäß eine Komponente auf, welche eingerichtet ist, die Funktionalität der Vorrichtung zur empfängerseitigen Bestimmung eines Abtastzeitpunkts bereitzustellen. Die Funktionalität kann hierbei in einer der gezeigten Einheiten implementiert sein oder als eine eigene Komponente bereitgestellt werden.

Wie aus Figuren 1 und 2 ersichtlich ist, kann der Sender und der Empfänger jeweils wechselseitig Datenströme übermitteln. Dies kann gleichzeitig oder zeitversetzt erfolgen. Somit ist es erfindungsgemäß möglich, dass der Sender gemäß Figur 1 und der Sender gemäß Figur 2 Rollen tauschen und somit insbesondere die erfindungsgemäß eingerichtete Empfängerseite dann gemäß Figur 1 angeordnet ist. Ebenso ist es lediglich gemäß einem Aspekt der vorliegenden Erfindung möglich, mindestens einen Sender und mindestens einen Empfänger vorzusehen, welche Daten austauschen. Somit kann eine beliebige Anzahl von Sendern und Empfängern kommunikativ verbunden sein.

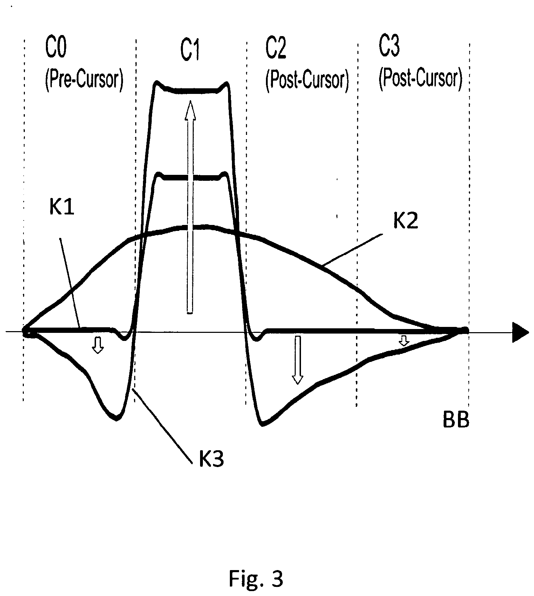

Figur 3 zeigt einen Verlauf eines kontinuierlichen Datensignals, wobei auf der X-Achse die kontinuirliche Zeit angetragen ist und auf der Y-Achse eine Signalstärke des kontinuierlichen Datensignals angetragen ist. Hierbei zeigt die Kurve K2 einen Signalverlauf eines Datensignals, wie es ohne korrigierende Modulierung übertragen wird. Nachteilig hierbei ist die fehlende Möglichkeit einer genauen Kodierung eines Bitwerts. Soll nunmehr eine Bitfolge aufweisend die Bitbelegung 010 kodiert werden, so erfolgt eine ungenaue Kodierung durch K2, da die Flanken lediglich träge ansteigen beziehungsweise abfallen und somit eine Kodierung der Bits unvorteilhaft abgebildet wird. Daher wird eine Kurve K3 auf das Datensignal aufmoduliert, welche beispielsweise mittels Filterkoeffizienten C0 und C2 ein steiles Ansteigen der Flanke von 0 auf 1 sowie ein steiles Abfallen der Flanke von 1 auf 0 herbeiführt. Die aufmodulierte Kurve K3 auf K2 bewirkt somit den vorteilhaften Kurvenverlauf der K1. Diese weist sowohl steile Flanken als auch ein ausgeprägtes Maximum auf, wodurch eindeutig die zugrundeliegenden Bitwerte kodiert werden. Erfindungsgemäß wird nunmehr erreicht, dass das kontinuierliche Datensignal auch genau an dessen Maximum ausgelesen wird, da ansonsten die vorteilhafte Modulierung nicht voll ausgeschöpft wird. Somit wird die Bitfolge, also der serielle Bitdatenstrom, fehlerfrei erkannt, da der kontinuierliche Datenstrom jeweils an geeigneter Stelle ausgelesen beziehungsweise gemessen wird.

Innerhalb der einzelnen Bitgrenzen, also während der Bitbreiten BB können Filterkoeffizienten angewendet werden, welche das kontinuierliche Datensignal DS vorteilhaft modulieren. Solche Filterkoeffizienten können auch als Pre-Cursor oder Post-Cursor bezeichnet werden. Beispielsweise kann C0 als ein Pre-Cursor und C3 als ein Post-Cursor bezeichnet werden. Somit wird mindestens ein Filterkoeffizient C0 vor und mindestens ein Filterkoeffizient C2 und/ oder C3 nach einem durchgeführten Abtasten gemessen und diese jeweils bei der Bestimmung des Abtastzeitpunkts berücksichtigt. Je nachdem wie das kontinuierliche Datensignal DS moduliert wird kann der mindestens eine Filterkoeffizient entweder nur vor oder nur nach einem durchgeführten Abtasten gemessen werden. Somit kann also nur der Wert des Filterkoeffizienten C0 oder der Wert des Filterkoeffizienten C2 berücksichtigt werden. Ausserdem gibt es eine Vielzahl weiterer Möglichkeiten gemäß weiteren Aspekten Filterkoeffizienten auszuwählen, diese zu Messen und bezüglich der Wahl des Abtastzeitpunktes zu berücksichtigen.

Pre-Cursor sind die Filterkoeffizienten, die die Bits vor dem abgetasteten Bit beeinflussen und entsprechend sind die Post-Cursor die Filterkoeffizienten, die die Bits nach dem abgetasteten Bit beeinflussen. Figur 3 zeigt beispielhaft als C0 den Pre-Cursor, während C2 sowie C3 die Post-Cursor zeigen, wobei C1 den Filterkoeffizient des abzutastenden Bits darstellt.

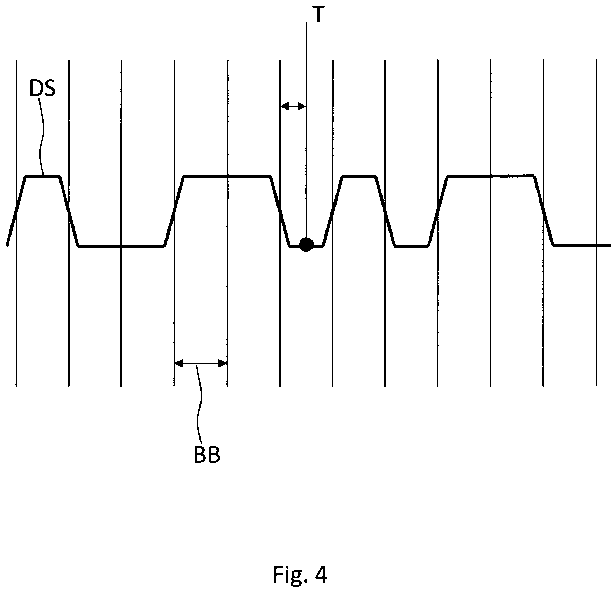

Figur 4 zeigt ein Bestimmen eines Abtastzeitpunkts T eines kontinuierlichen Datensignals DS und zum Erkennen eines Bitwertes innerhalb einer Bitbreite BB eines seriellen Bitdatenstroms. Die vorliegende Figur 4 zeigt schemenhaft den Verlauf des kontinuierlichen Datensignals DS mit vereinfachter Darstellung der Flanken. Typischerweise erfolgt ein Auslesen des kontinuierlichen Datensignals DS in der zeitlichen Mitte einer Bitbreite, da angenommen wird, dass hier das Maximum der Amplitude der Signalstärke liegt. Da dies jedoch in einigen Anwendungsszenarien nicht der Fall ist und der genaue Verlauf der Kurve von den voreingestellten Filterkoeffizienten abhängt ist es besonders vorteilhaft den Zeitpunkt des durchzuführenden Abtastens derart anzupassen, dass er im tatsächlichen Maximum der Amplitude liegt.

Somit zeigt Figur 4 nicht lediglich ein Bestimmen eines Abtastzeitpunkts T, sondern implizit auch ein Verschieben eines Abtastzeitpunkts eines durchzuführenden Abtastens. Somit kann in besonders vorteilhafter Weise ein vorbestimmter Abtastzeitpunkt dahingehend variiert werden, dass er am Maximum der Amplitude liegt. Der so bestimmte Abtastzeitpunkt T kann somit relativ zu einem weiteren Abtastzeitpunkt bestimmt werden. Auch ist es erfindungsgemäß möglich den Abtastzeitpunkt T in Abhängigkeit einer Bitbreite beziehungsweise einer Grenze der Bitbreite zu bestimmen. So ist es vorteilhaft den Abtastzeitpunkt T als einen relativen zeitlichen Abstand von der Grenze der Bitbreite zu definieren, da hiermit jedes einzelne Bit zu einem festen voreingestellten Wert nach einem bestimmten Überschreiten der Bitgrenze ausgelesen werden kann.

Der in Figur 4 gezeigte Zeitpunkt T des Abtastens kann entweder zeitlich nach vorne oder hinten verschoben werden, was vorliegend durch einen bidirektionalen Pfeil dargestellt ist. Typischerweise liegt der Zeitpunkt T des Abtastens nicht auf einer Bitgrenze, sondern ist innerhalb jeweils einer jeweiligen Bitbreite zeitlich angeordnet. Das gezeigte kontinuierliche Datensignal DS wird auf einem Trägermedium gemessen und kann alternativ oder zusätzlich direkt in einer Einheit des Empfängers gemessen beziehungsweise bestimmt werden. Hierbei können weitere Einheiten vor- oder nachgeschaltet sein, welche beispielsweise eine Fehlerkorrektur vornehmen oder das Signal verstärken beziehungsweise anpassen.

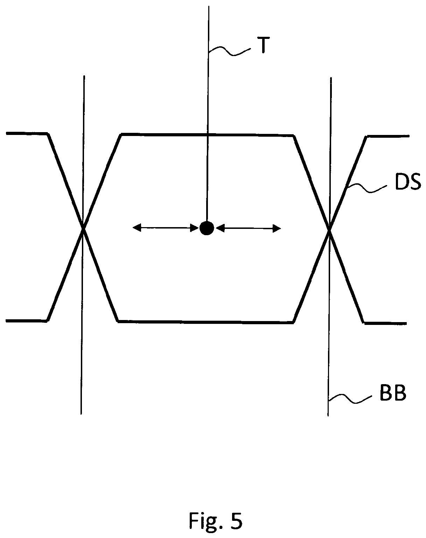

Figur 5 zeigt einen weiteren Verlauf eines kontinuierlichen Datensignals DS, welches mit einem weiteren, zusätzlichen Datensignal überlagert werden kann. Hierbei wird empfängerseitig das jeweilige Datensignal erkannt und entsprechend weiterverarbeitet. Das kontinuierliche Datensignal DS kodiert einen seriellen Bitdatenstrom mittels entsprechender Signalstärken.

Die Empfangsqualität eines kontinuierlichen Datensignals DS kann anhand eines Augendiagramms beziehungsweise der Augenöffnung erfasst werden. Hierzu können die elektrischen Signalverläufe derart überlagert werden, dass sich eine Summation der auftretenden Signalübergänge jeweils zwischen 0 und 1 ergibt, anhand derer die Signalqualität der digitalen Datenübertragung mittels der auftretenden Abweichungen mehrerer Empfangsversuche des gleichen kontinuierlichen Datensignals DS beurteilt werden.

Die vertikale und/oder die horizontale Augenöffnung werden gemäß einem Aspekt der vorliegenden Erfindung ermittelt und lassen einen Rückschluss auf die Empfangsqualität zu. Da somit eine Auswahl an Parametern des Übertragungsmediums gemessen werden kann, lässt sich die Empfangsqualität durch die Einstellung eines Vorverzerrers verbessern. Ebenso können Rückschlüsse bezüglich einer zu erwartenden Amplitude des kontinuierlichen Datensignals DS ermittelt werden und diese bei einem Bestimmen eines geeigneten Abtastzeitpunkts T berücksichtigt werden.

Typischerweies wird in der zeitlichen Mitte des Auges gemessen. Dies kann aber nachteilig sein und bietet nur wenig bis keine Marge. Das heißt es muss stetig und schnell nachgeregelt werden. In einem verteilten System in dem Sender zum Empfänger signalisieren ist dies jedoch nachteilig, mindestens bezüglich der Latenzzeit und der Bandbreite. Deshalb kann man die Augenöffnung auch im vorderen beziehungsweise hinteren zeitlichen Drittel des Auges messen und erhält damit eine bessere Aussage über die Qualität des Auges und kann damit Vorverzerrungswerte mit bessere Margin berechnen, was weniger häufiges Regeln zur Folge hat.

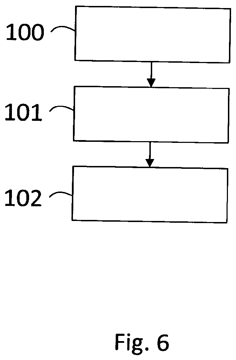

Figur 6 zeigt ein Verfahren zum empfängerseitigen Bestimmen eines Abtastzeitpunkts T eines kontinuierlichen Datensignals DS und zum Erkennen eines Bitwertes innerhalb einer Bitbreite BB eines seriellen Bitdatenstroms. In einem ersten Verfahrensschritt 100 erfolgt ein Messen mindestens eines Filterkoeffizienten des kontinuierlichen Datenstroms, welcher zur Modulierung des zu übertragenden kontinuierlichen Datensignals durch eine Datensignalkompensationseinrichtung vorgesehen ist. Ist dieser eine oder die mehreren Filterkoeffizienten bekannt, so erfolgt in einem weiteren, optionalen Verfahrensschritt ein Auslesen einer Abtastzeitpunktmetrik, welche vorgibt, nach welchem Verfahren ein Bestimmen eines Abtastzeitpunkts T erfolgt. Hierbei kann es gemäß einem Aspekt der vorliegenden Erfindung vorteilhaft sein, dass der Abtastzeitpunkt T in Abhängigkeit einer Summe von Signalstärken der gemessenen Filterkoeffizienten bestimmt wird. Hierbei kennt der Fachmann herkömmliche Methoden, die eine Summation der Filterkoeffizienten berücksichtigt. Besonders vorteilhaft ist es erfindungsgemäß jedoch, dass die Abtastzeitpunktmetrik vorsieht, dass der Abtastzeitpunkt zum Minimum der Summe der Signalstärken der gemessenen Filterkoeffizienten vorliegt. Heraus lässt sich also in Abhängigkeit der Filterkoeffizienten berechnen, wie der Zeitpunkt T des Abtastens zu wählen ist.

Somit ist es also gemäß einem Aspekt der vorliegenden Erfindung möglich, Zeitpunkt des Abtastens des kontinuierlichen Datensignals DS zu bestimmen, sobald die gemessenen oder zumindest ermittelten Signalstärken der Filterkoeffizienten bekannt sind. Hierdurch ist es beispielsweise möglich, die zu erwartenden Signalstärken aus einem Datenspeicher, sei dieser flüchtig oder nicht, auszulesen und somit den Abtastzeitpunkt zu berechnen. Somit können optional Filterkoeffizienten auch ausgelesen werden, worauf in Verfahrensschritt 101 ein Bestimmen des Abtastzeitpunkts T in Abhängigkeit des mindestens einen gemessenen, bereitgestellten, ausgelesenen oder übermittelten Filterkoeffizienten und einer bereitgestellten Abtastzeitpunktmetrik erfolgt, derart, dass eine Amplitude des zu übertragenden kontinuierlichen Datensignals DS zu diesem Abtastzeitpunkt T ein Maximum erreicht. Hierbei ist das Maximum jedoch zeitlich stark begrenzt, so dass das Verfahren zumindest auf eine geeignete zeitliche Nähe bezüglich des Maximums abstellt.

Das Verfahren ist zudem gemäß einem weiteren Aspekt gerichtet auf ein tatsächliches Messen beziehungsweise Abtasten des kontinuierlichen Datensignals DS und nicht lediglich auf ein Bestimmen des Abtastzeitpunkts T. Somit erfolgt in einem weiteren Verfahrensschritt 102 ein Abtasten des kontinuierlichen Datensignals DS. Hierbei erkennt der Fachmann, wie er ein solches kontinuierliches Datensignal DS abtastet beziehungsweise ausliest. Weitere optionale Verfahrensschritte umfassen ein Auswerten des Messergebnisses sowie eine Interpretation des Messergebnisses. Somit kann erfindungsgemäß mit hoher Zuverlässigkeit eine Bitbelegung jeweils eines in einem seriellen Bitdatenstrom übertragenen Bits festgestellt werden.

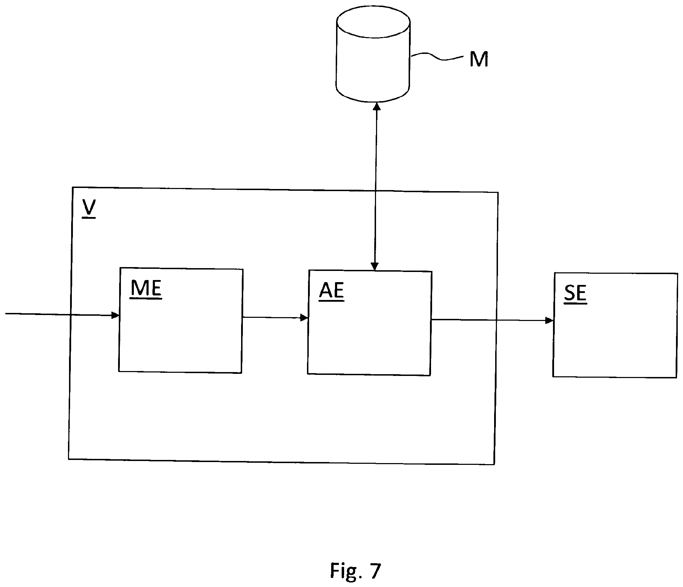

Figur 7 zeigt eine Vorrichtung V zur empfängerseitigen Bestimmung eines Abtastzeitpunkts T eines kontinuierlichen Datensignals DS und zum Erkennen eines Bitwertes innerhalb einer Bitbreite BB eines seriellen Bitdatenstroms. Die erfindungsgemäße Vorrichtung V kann Teil eines entsprechenden Systems aufweisend einen Sender sein, welches zur Datenkommunikation über ein Trägermedium eingerichtet ist.

Die Vorrichtung V weist auf eine Messeinheit ME eingerichtet zum Messen 100 mindestens eines Filterkoeffizienten, welcher zur Modulierung des zu übertragenden kontinuierlichen Datensignals DS durch eine Datensignalkompensationseinrichtung vorgesehen ist.

Die erfindungsgemäße Vorrichtung V weist weiterhin auf eine Abtastzeiteinheit AE zum Bestimmen 101 des Abtastzeitpunkts T in Abhängigkeit des mindestens einen gemessenen Filterkoeffizienten und einer bereitgestellten Abtastzeitpunktmetrik derart, dass eine Amplitude des zu übertragenden kontinuierlichen Datensignals zu diesem Abtastzeitpunkt T ein Maximum erreicht. Hierzu kann die Vorrichtung V kommunikativ mit einem Datenspeicher verbunden sein, welcher die Metrik M abspeichert und über eine Schnittstelle zur Verfügung stellt. Weiterhin kann eine Sensoreinheit SE an die Vorrichtung V angebunden sein, welche zum bestimmten Abtastzeitpunkt T das kontinuierliche Datensignal DS abtastet und die Signalstärke an eine Auswerteeinheit übermittelt, welche anhand der Signalstärke und eines bereitgestellten Schwellwerts ermittelt, ob der gemessene Wert eine 0 oder eine 1 kodiert. Ferner ist es möglich die Abtastzeitpunktmetrik derart anzupassen, dass weitere Parameter berücksichtigt werden.

Ferner kann ein weiterer Datenspeicher vorgesehen sein, welcher Steuerbefehle bereitstellt, welche ein Ausführen des vorgeschlagenen Verfahrens veranlassen. Ein solches Computerprogramm, welches die Durchführung eines Verfahrens gemäß einem der vorbeschriebenen Aspekte veranlasst, kann als Steuerbefehle vorliegen, maschinennahe Befehle, ein Schaltdiagramm oder kann bereits festverdrahtet in Form eines entsprechend eingerichteten Schaltkreises vorliegen. Ferner ist es möglich das Computerprogramm vor einem Ausführen des Verfahrens mittels einer Datenschnittstelle bereitzustellen oder zur Laufzeit einzelne Steuerbefehle bereitzustellen.

Somit wird ein Verfahren, eine Vorrichtung und ein System zur fehlerfreien Erkennung von Bitwerten, welche mittels eines kontinuierlichen Datensignals übermittelt werden vorgeschlagen. Eine besonders vorteilhafte Metrik, welche einen Rückschluss auf einen optimalen Zeitpunkt eines Abtastens des Datensignals erlaubt und somit eine eindeutige Erkennung des Bitwerts zulässt ist ein Aspekt der vorliegenden Erfindung. Hierbei erkennt der Fachmann, dass einzelne Verfahrensschritte iterativ und/oder in anderer Reihenfolge ausgeführt werden können. Zudem sind typischerweise weitere, begleitende Verfahrensschritte und Steuereinheiten vorzusehen.

## Patentansprüche

1. Verfahren zum empfängerseitigen Bestimmen eines Abtastzeitpunkts (T) eines kontinuierlichen Datensignals (DS) und zum Erkennen eines Bitwertes innerhalb einer Bitbreite (BB) eines seriellen Bitdatenstroms, aufweisend:
- empfängerseitiges Messen (100) mindestens eines Filterkoeffizienten des kontinuierlichen Datenstroms, welcher zur Modulierung des zu übertragenden kontinuierlichen Datensignals (DS) durch eine Datensignalkompensationseinrichtung vorgesehen ist, wobei mindestens ein Filterkoeffizient vor und mindestens ein Filterkoeffizient nach einem durchgeführten Abtasten gemessen (100) wird; und
- Bestimmen (101) des Abtastzeitpunkts (T) in Abhängigkeit der mindestens zwei gemessenen Filterkoeffizienten und einer bereitgestellten Abtastzeitpunktmetrik (M) derart, dass eine Amplitude des zu übertragenden kontinuierlichen Datensignals (DS) zu diesem Abtastzeitpunkt (T) ein Maximum erreicht, wobei die Abtastzeitpunktmetrik (M) vorsieht, dass der Abtastzeitpunkt (T) in Abhängigkeit einer Summe von Signalstärken der gemessenen Filterkoeffizienten bestimmt wird.

2. Verfahren nach Anspruch 1, wobei ein Messen (100) des mindestens einen Filterkoeffizienten mittels mindestens eines Messverfahrens aus einer Menge von Messverfahren durchgeführt wird, die Menge aufweisend ein Auslesen mindestens eines Messsensors, ein Berechnen in Abhängigkeit von Übertragungsparametern, ein Bestimmen, ein Auslesen eines Datenspeichers, ein Auslesen einer Übertragungskonfiguration, ein Auswerten eines Algorithmus insbesondere eines LMS-Algorithmus, ein Bestimmen mindestens eines Pre-cursors und ein Bestimmen mindestens eines Post-cursors.

3. Verfahren nach Anspruch 1 oder 2, wobei die Abtastzeitpunktmetrik (M) vorsieht, dass der Abtastzeitpunkt zum Minimum der Summe der Signalstärken der gemessenen Filterkoeffizienten vorliegt.

4. Verfahren nach einem der vorherigen Ansprüche, wobei die Abtastzeitpunktmetrik (M) mittels mindestens eines Bereitstellungsverfahrens aus einer Menge bereitgestellt wird, die Menge aufweisend ein Auslesen eines Datenspeichers, ein Bereitstellen einer festverdrahteten Metrikeinheit, ein Bereitstellen einer hardware-technisch eingerichteten Metrikeinheit, ein Bereitstellen einer Metrikschaltung, ein Bereitstellen einer entsprechend geschalteten Metrikkomponente, ein Bereitstellen eines Steuerwerks und Bereitstellen eines Schaltwerks.

5. Verfahren nach einem der vorherigen Ansprüche, wobei der zu bestimmende Abtastzeitpunkt (T) relativ zu einem weiteren Zeitpunkt aus einer Menge von Zeitpunkten bestimmt wird, die Menge aufweisend: einen weiteren Abtastzeitpunkt, eine Bitbreitengrenze, eine Datensignalflanke und eine gemessene Amplitudenhöhe.

6. Verfahren nach einem der vorherigen Ansprüche, wobei zum Messen (100) mindestens eines Filterkoeffizienten eine Datensignalstärke ermittelt wird.

7. Verfahren nach einem der vorherigen Ansprüche, wobei die Datensignalkompensationseinrichtung als mindestens eine Einheit aus einer Menge von Einheiten gebildet ist, die Menge aufweisend: ein Steuerwerk, ein Schaltwerk, ein Verzerrer, ein Vorverzerrer, ein Empfänger und ein Sender.

8. Verfahren nach einem der vorherigen Ansprüche, wobei das kontinuierliche Datensignal (DS) mittels mindestens einem Signalträgermedium aus einer Menge übertragen wird, die Menge aufweisend: ein Kabel, eine leitende Verbindung, eine differentielle Leitung, eine Koaxleitung und eine Bus-Leitung.

9. Verfahren nach einem der vorherigen Ansprüche, wobei eine Messeinrichtung (SE) zum Bestimmen der Amplitude des Datensignals zu einem vorbestimmten Zeitpunkt ausgelesen wird.

10. Vorrichtung (V) zur empfängerseitigen Bestimmung eines Abtastzeitpunkts (T) eines kontinuierlichen Datensignals (DS) und zum Erkennen eines Bitwertes innerhalb einer Bitbreite (BB) eines seriellen Bitdatenstroms, aufweisend:
- eine Messeinheit (ME) eingerichtet zum Messen (100) mindestens eines Filterkoeffizienten, welcher zur Modulierung des zu übertragenden kontinuierlichen Datensignals (DS) durch eine Datensignalkompensationseinrichtung vorgesehen ist , wobei mindestens ein Filterkoeffizient vor und mindestens ein Filterkoeffizient nach einem durchgeführten Abtasten messbar ist; und
- eine Abtastzeiteinheit (AE) zum Bestimmen (101) des Abtastzeitpunkts in Abhängigkeit der mindestens zwei gemessenen Filterkoeffizienten und einer bereitgestellten Abtastzeitpunktmetrik (M) derart, dass eine Amplitude des zu übertragenden kontinuierlichen Datensignals (DS) zu diesem Abtastzeitpunkt (T) ein Maximum erreicht, wobei die Abtastzeitpunktmetrik (M) vorsieht, dass der Abtastzeitpunkt (T) in Abhängigkeit einer Summe von Signalstärken der gemessenen Filterkoeffizienten bestimmt wird.

11. Kommunikationssystem aufweisend mindestens eine Vorrichtung (V) gemäß Anspruch 10.

12. Computerprogramm, umfassend Befehle, die bei der Ausführung des Programms durch einen Computer diesen veranlassen, das Verfahren gemäß einem der Ansprüche 1 bis 9 auszuführen.

## Claims

1. A method for receiver-side determination of a sampling time (T) of a continuous data signal (DS) and for detecting a bit value within a bit width (BB) of a serial bit data stream, comprising:
- receiver-side measuring (100) at least one filter coefficient of the continuous data stream, provided for modulating the continuous data signal (DS) to be transmitted by way of a data signal compensation device, wherein at least one filter coefficient before and at least one filter coefficient after a sampling which is carried out are measured (100), and
- determining (101) the sampling time (T) as a function of the at least two measured filter coefficient and a provided sampling time metric (M), in such a way that an amplitude of the continuous data signal (DS) to be transmitted achieves a maximum at this sampling time (T), wherein the sampling time metric (M) provides that the sampling time (T) is determined as a function of a sum of signal strengths of the measured filter coefficients.

2. The method according to claim 1, wherein the at least one filter coefficient is measured (100) by at least one measurement method from a set of measuring methods, the set comprising reading out at least one measurement sensor, calculation as a function of transmission parameters, determination, reading out a data memory, reading out a transmission configuration, evaluating an algorithm, in particular an LMS algorithm, determining at least one precursor and determining at least one postcursor.

3. The method according to one of claims 1 or 2, wherein the sampling time metric provides that the sampling time is located at the minimum of the sum of the signal strengths of the measured filter coefficients.

4. The method according to any one of the preceding claims, wherein the sampling time metric (M) is provided by at least one provision method from a set, the set comprising reading out a data memory, providing a hard-wired metric unit, providing a metric unit implemented in hardware, providing a metric circuit, providing a correspondingly wired metric component, providing a control unit, and providing a control unit.

5. The method according to any one of the preceding claims, wherein the sampling time (T) to be determined is determined relative to a further time from a set of times, the set comprising: a further sampling time, a bit width boundary, a data signal flank and a measured amplitude level.

6. The method according to any one of the preceding claims, wherein a data signal strength is determined so as to measure (100) at least one filter coefficient.

7. The method according to any one of the preceding claims, wherein the data signal compensation device is formed as at least one unit from a set of units, the set comprising: a control unit, a switchboard, a distortion module, a pre-distortion module, a receiver and a transmitter.

8. The method according to any one of the preceding claims, wherein the continuous data signal (DS) is transmitted using at least one signal carrier medium from a set of media, the set comprising: a cable, a conductive connection, a differential line, a coaxial line and a bus line.

9. The method according to any one of the preceding claims, wherein a measurement device (SE) is read out at a predetermined time to determine the amplitude of the data signal.

10. An apparatus (V) for receiver-side determination of a sampling time (T) of a continuous data signal (DS) and for determining a bit value within a bit width (BB) of a serial bit data stream, comprising:
- a measurement unit (ME) arranged to measure (100) at least one filter coefficient which is provided for modulating the data signal (DS) to be continuously transmitted by way of a data compensation device, wherein at least one filter coefficient before and at least one filter coefficient after a sampling which is carried out are measured (100); and
- a sampling time unit (AE) for determining (101) the sampling time as a function of the at least two measured filter coefficient and a provided sampling time metric (M), in such a way that an amplitude of the data signal (DS) to be continuously transmitted achieves a maximum at this sampling time (T), wherein the sampling time metric (M) provides that the sampling time (T) is determined as a function of a sum of signal strengths of the measured filter coefficients.

11. A communication system comprising at least one apparatus (V) according to claim 10.

12. A computer program comprising instructions which, when the program is executed by a computer, cause the same to carry out a method according to any of claims 1 to 9.

## Revendications

1. Procédé de détermination côté récepteur d'un instant d'échantillonnage (T) d'un signal de données continu (DS) et de reconnaissance d'une valeur binaire à l'intérieur d'une largeur binaire (BB) d'un train de bits sériel, comportant :
- mesure côté récepteur (100) d'au moins un coefficient de filtre du flux de données continu, lequel est prévu pour la modulation du signal continu (DS) à transmettre par un dispositif de compensation de signal de données, dans lequel des coefficients de filtre sont mesurés (100) avant et après un échantillonnage effectué (au moins un avant et au moins un après) ; et
- détermination (101) de l'instant d'échantillonnage (T) en fonction des aux moins deux coefficients de filtre mesurés et d'une métrique d'instant d'échantillonnage (M) fournie, de telle façon qu'une amplitude du signal de données (DS) continu à transmettre atteint un maximum à cet instant d'échantillonnage (T), dans lequel la métrique d'instant d'échantillonnage (M) prévoit que l'instant d'échantillonnage (T) est déterminé en fonction d'une somme d'intensités de signal des coefficients de filtre mesurés.

2. Procédé selon la revendication 1, dans lequel une mesure (100) de l'au moins un coefficient de filtre est effectuée au moyen d'au moins un procédé de mesure parmi une quantité de procédés de mesure, la quantité comportant une lecture d'au moins un capteur de mesure, un calcul en fonction de paramètres de transmission, une détermination, une lecture d'un enregistreur de données, une lecture d'une configuration de transmission, une lecture d'un algorithme, en particulier un algorithme LMS, une détermination d'au moins un pré-curseur et une détermination d'au moins un post-curseur.

3. Procédé selon la revendication 1 ou 2, dans lequel la métrique d'instant d'échantillonnage (M) prévoit que l'instant d'échantillonnage se trouve au minimum de la somme des intensités de signal des coefficients de filtre mesurés.

4. Procédé selon l'une des revendications précédentes, dans lequel la métrique d'instant d'échantillonnage (M) est fournie au moyen d'au moins un procédé de fourniture parmi une quantité de procédés de fourniture, la quantité comportant une lecture d'un enregistreur de données, une fourniture d'une unité métrique câblée, une fourniture d'une unité métrique intégrée au matériel, une fourniture d'un circuit métrique, une fourniture d'un composant métrique commuté conformément, une fourniture d'une unité de commande et fourniture d'une unité de commutation.

5. Procédé selon l'une des revendications précédentes, dans lequel l'instant d'échantillonnage (T) à déterminer est déterminé relativement à un autre instant issu d'une quantité d'instants, la quantité comportant : un autre instant d'échantillonnage, une limite de largeur binaire, une pente d'un signal de données et une grandeur d'amplitude.

6. Procédé selon l'une des revendications précédentes, dans lequel une intensité de signal de données est évaluée pour la mesure (100) d'au moins un coefficient de filtre.

7. Procédé selon l'une des revendications précédentes, dans lequel le dispositif de compensation de signal de données est conçu comme au moins une unité d'une quantité d'unités, la quantité comportant : une unité de commande, une unité de commutation, une unité de distorsion, une unité de prédistorsion, un récepteur et un émetteur.

8. Procédé selon l'une des revendications précédentes, dans lequel le signal de données continu (DS) est transmis au moyen d'au moins un milieu porteur de signal issu d'une quantité, la quantité comportant : un câble, un raccord conducteur, une ligne différentielle, une ligne coaxiale et une ligne bus.

9. Procédé selon l'une des revendications précédentes, dans lequel un dispositif de mesure (SE) est lu à un instant prédéterminé pour déterminer l'amplitude du signal de données.

10. Dispositif (V) de détermination côté récepteur d'un instant d'échantillonnage (T) d'un signal de données continu (DS) et de reconnaissance d'une valeur binaire à l'intérieur d'une largeur binaire (BB) d'un train de bits sériel, comportant :
- une unité de mesure (ME) disposée pour mesurer (100) au moins un coefficient de filtre du flux de données continu, lequel est prévu pour la modulation du signal continu (DS) à transmettre par un dispositif de compensation de signal de données, dans lequel des coefficients de filtre peuvent être mesurés avant et après un échantillonnage effectué (au moins un avant et au moins un après) ; et
- une unité d'échantillonnage (AE) pour déterminer (101) l'instant d'échantillonnage (T) en fonction des aux moins deux coefficients de filtre mesurés et d'une métrique d'instant d'échantillonnage (M) fournie, de telle façon qu'une amplitude du signal de données (DS) continu à transmettre atteint un maximum à cet instant d'échantillonnage (T), dans lequel la métrique d'instant d'échantillonnage (M) prévoit que l'instant d'échantillonnage (T) est déterminé en fonction d'une somme d'intensités de signal des coefficients de filtre mesurés.

11. Système de communication comportant au moins un dispositif (V) selon la revendication 10.

12. Programme informatique, comprenant des instructions permettant, lors de l'exécution du programme par un ordinateur, de mettre en oeuvre un procédé selon l'une des revendications 1 à 9.
